# EUROPEAN PATENT APPLICATION

(11) **EP 3 848 665 A1**
(43) Date of publication of application: **14.07.2021**
(21) Application number: 20461501.7
(22) Date of filing: 08.01.2020
(51) Int. Cl.: F28F 9/02, B23K 1/00, B23K 1/008, B23K 37/00

(54) **A HEAT EXCHANGER CONNECTION BLOCK, A HEAT EXCHANGER ASSEMBLY WITH SAID CONNECTION BLOCK AND A METHOD OF MANUFACTURING SAID HEAT EXCHANGER ASSEMBLY**

(71) Applicant: Valeo Autosystemy SP. Z.O.O., 32-050 Skawina (PL)
(72) Inventor: LAS, Piotr, 32 050 SKAWINA (PL); INDYKA, Michal, 32 050 SKAWINA (PL); SKORUS, Edyta, 32 050 SKAWINA (PL); RADECKI, Maciej, 32 050 SKAWINA (PL); FLISNIK, Pawel, 32 050 SKAWINA (PL)
(74) Representative: Bialkowski, Adam

(57) **Abstract**

A heat exchanger connection block 6 comprising an opening 20 for a tube 7 and a see-through channel 22 tangent to the opening 20, the opening 20 being adapted to receive a brazing ring 30, wherein the connection block 6 is adapted to accommodate at least part of the brazing ring 30 within the see-through channel 22.

## Description

### FIELD OF THE INVENTION

The invention relates to a heat exchanger connection block. Further, it relates to a heat exchanger manifold comprising said connection block and a heat exchanger comprising said connection block.

### BACKGROUND OF THE INVENTION

In the field of heat exchangers, the components may be connected to each other through various means and processes. One of them is brazing, in which a component made of material with melting temperature lower than in other components melts and then solidifies to connect said components.

One of elements used in a brazing process may be a brazing ring, which is a circular element constituted by a brazing material. Such brazing ring may for example be put around a circular opening, into which subsequently a cylindrical element is introduced. The whole assembly is then put into a brazing furnace and subjected to a temperature, which will cause melting of the brazing material but not of the components. After cooling of the assembly, the components are effectively brazed and immobilized with respect to each other.

However, during the manufacturing process it may occur that the brazing ring will not for some reason be introduced properly into a desired place. It may also happen that the brazing ring will not be introduced at all. This is highly undesirable, as in such case the connection will not be performed properly and the components will not be sealingly connected. The result of such occurrence may be leaks of the heat exchange fluid or even falling out of the element intended to be connected, which leads to quality issues.

It would be desirable to provide a design of a heat exchange component, which would enable prevention of defective brazing in a simple and cost effective manner.

### SUMMARY OF THE INVENTION

The object of the invention is, among others, a heat exchanger connection block comprising an opening for a tube and a see-through channel tangent to the opening, the opening being adapted to receive a brazing ring, wherein the connection block is adapted to accommodate at least part of the brazing ring within the see-through channel.

Preferably, the see-through channel is exposed from the face of the opening.

Preferably, the see-through channel is covered with respect to the face of the opening.

Preferably, a tube is inserted into the opening.

Preferably, the tube comprises a collar adjacent to the opening.

Preferably, a brazing ring is received in the opening and accommodated at least partly within the see-through channel.

Preferably, the collar is brazed to the connection block and to the see-through channel.

Preferably, the opening comprises a stop portion for a tube, configured to enable only partial insertion of the tube.

Another object of the invention is a manifold comprising a connection block as described above.

Another object of the invention is a heat exchanger comprising a connection block as described above.

Another object of the invention is a method of manufacturing of a heat exchanger assembly, comprising steps of: providing a heat exchanger assembly with a connection block and a tube introduced into the connection block; aligning the heat exchanger assembly in a position for determining of presence of a brazing ring between the connection block and the tube; determining presence of the brazing ring by means of a sensor and selecting between sending the heat exchanger assembly for brazing process in case of presence of the brazing ring and preventing the heat exchanger assembly from being sent for brazing process in case of absence of the brazing ring.

### BRIEF DESCRITPTION OF DRAWINGS

Examples of the invention will be apparent from and described in detail with reference to the accompanying drawings, in which:
Fig. 1 shows a heat exchanger comprising a connection block according to the invention;
Fig. 2 shows a prior art connection block in a perspective view;
Fig. 3 shows a connection block according to the invention in a perspective view;
Fig. 4 shows a connection block according to the invention in a side view with a brazing ring in place;
Fig. 5 shows checking of presence of a brazing ring within the block in case of brazing ring presence;
Fig. 6 shows a connection block according to the invention in a side view with no brazing ring in place;
Fig. 7 shows checking of presence of a brazing ring within the block in case of brazing ring absence;
Fig. 8 shows a method of manufacturing of a heat exchanger assembly according to the invention.

### DETAILED DESCRIPTION OF EMBODIMENTS

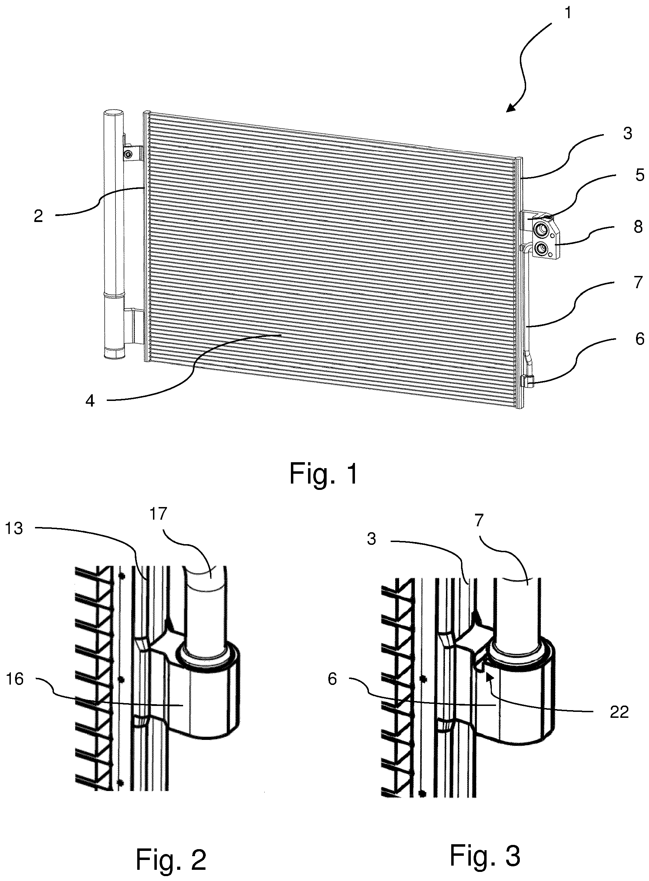

Fig. 1 shows a heat exchanger 1 comprising a connection block 6 according to the invention. In this case, the heat exchanger 1 is a condenser. The invention may however apply to different heat exchangers in which a cylindrical element is connected to a connection block by use of a brazing ring.

The heat exchanger 1 comprises manifolds 2, 3 connected fluidly to each other by means of heat exchange tubes 4. The heat exchanger 1 further comprises connection blocks 5, 6 serving as an inlet and outlet of the heat exchanger 1. The connection blocks 5, 6 are attached to manifold 3 to enable flow to and from heat exchange tubes 4. The heat exchange blocks 5, 6 may be located each on a separate manifold 2, 3 or on a common manifold 2, 3, depending on flow configuration within the heat exchanger 1. Connection block 6 is further connected with a so-called jumper line. In this case, this is a tube 7 introduced into the block 6. The function of the tube 7 is to convey the heat exchange fluid to or from a differently positioned place with respect to the connection block 6. The reason for such arrangement may be a requirement for placement of a socket 8, serving as a connection point for heat exchange conduits of the system to and/or from the heat exchanger, in a place different from the position of the inlet/outlet connection block resulting from preferred fluid flow arrangement within the heat exchanger. In other words, it may happen than the actual outlet or inlet of a heat exchange pass of the heat exchanger must be positioned differently than the connection socket 8 of the heat exchange system conduit lines (which are not shown).

Fig. 2 shows a prior art connection block 16 in a perspective view, in an application analogous to the one from Fig. 1. A connection block 16 is connected to manifold 13, while a tube 17 is connected to the connection block 16, so that a heat exchange fluid can be relayed between these elements. The connection block 16 is uniform in the region in which the tube 17 is introduced therein. The tube 17 may be connected to connection block 16 by use of a brazing ring.

Fig. 3 shows a connection block according to the invention in a perspective view. As in case of connection block 16 in Fig. 2, the connection block 6 is connected to the manifold 3, while tube 7 is connected to the connection block 6 so that fluid communication between them is enabled. Compared to prior art connection block 16, the connection block 6 further comprises a see-through channel 22, which enables external, for example visual, determination of brazing ring presence, as will be explained below.

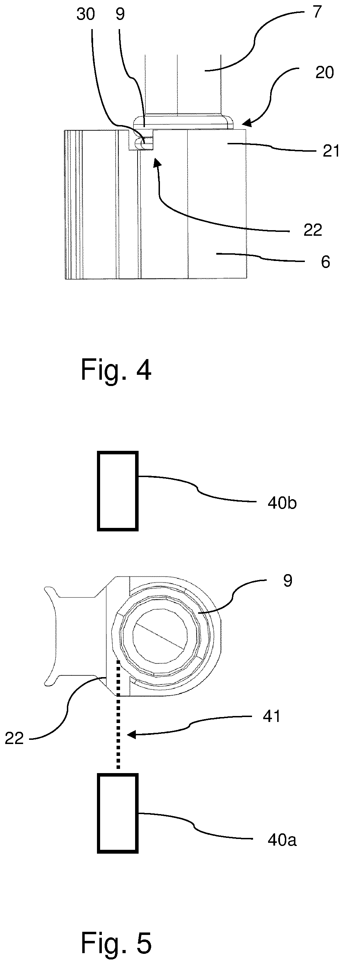

Fig. 4 shows a connection block 6 according to the invention in a side view with a brazing ring 30 in place. The connection block 6 comprises an opening 20 in which tube 7 is insertable, wherein the connection block 6 further comprises an opening collar 21 to protect part of the connection. The opening 20 is adapted to receive a brazing ring 30. An example of such adaptation is a dedicated annular groove intended for placement of a brazing ring so that during brazing the brazing material will join the tube 7 with the connection block 6. The see-though channel 22 is configured so that when the brazing ring 30 is not received in the opening 20, it is possible for a see through the channel 22 from one side of the connection block 6 to another. In other words, it is possible for a laser beam to travel through the see-through channel 22 from one side of the heat exchanger block 6 to another in an unobstructed manner. On the other hand, when a brazing ring 30 is received in the opening 20, the see-though channel 22 becomes at least partly obstructed. In such case, a laser beam travel through the see-through channel 22 is hindered or prevented. The see-through channel 22 may be exposed from the face of the opening 20. This may allow to facilitate insertion of the brazing ring 30. In another embodiment, the see-through channel 22 may be covered with respect to the face of the opening 20. In other words, the face of the opening 20 may be uniform when viewed along the axis of the opening 20, without any open channel being tangent to it. Covered see-through channel 22 may prevent the brazing ring 30 from falling out before insertion of tube 7. It may also protect the connection after brazing process. The opening 20 may comprise a stop portion for the tube 7, configured to enable only partial insertion of the tube 7 into the connection block 6. The stop portion may be a section of the opening 20 deeper within the connection block 6, with a reduced diameter so that the tube 7 will stop on it after insertion. The tube 7 may comprise a collar 9 adjacent to the opening 20, for facilitating brazing connection with the connection block.

Fig. 5 shows checking of presence of a brazing ring 30 within the block 6 in case of brazing ring 30 presence. The check can be performed by means of sensors, for example by a system comprising an emitter 40a and a receiver 40b. The laser beam 41 sent by the emitter 40a is stopped by the brazing ring 30 within the see-through channel 22, and is prevented from reaching the receiver 40b. In such case, the presence of the brazing ring 30 can be confirmed and the heat exchanger can be sent for brazing process.

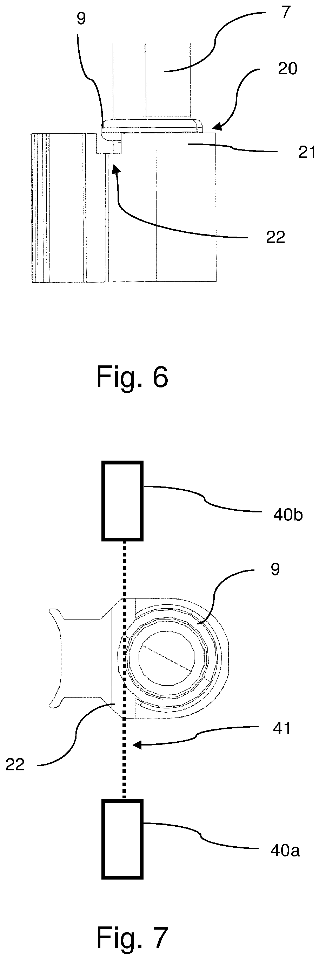

Fig. 6 shows a connection block 6 according to the invention in a side view with no brazing ring 30 in place. The see-through channel 22 is unobstructed by the brazing ring 30.

Fig. 7 shows checking of presence of a brazing ring 30 within the block 6 in case of brazing ring 30 absence. The laser beam 41 sent by an emitter 40a is not stopped by the brazing ring 30 within the see-through channel 22, therefore it can reach the receiver 40b. In such case, the absence of the brazing ring 30 can be confirmed and the heat exchanger can be prevented from being sent for brazing process.

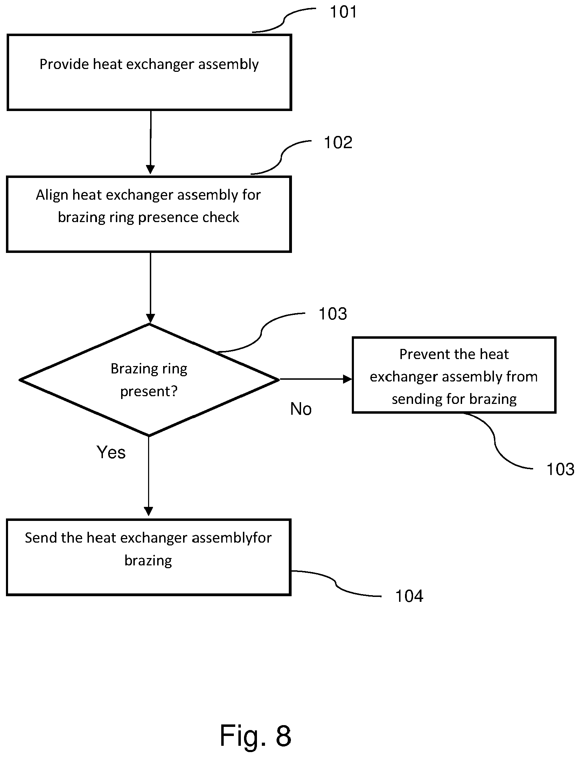

Fig. 8 shows a method of manufacturing of a heat exchanger according to the invention. Firstly, a heat exchanger assembly with a connection block 6 and a tube 7 introduced into the connection block 6 is provided in step 101. Next, the heat exchanger assembly is aligned in a position for determining of presence of a brazing ring 30 between the connection block 6 and the tube 7 in step 102. Subsequently, in step 103, presence of the brazing ring is determined, by a human worker or automatically, for example by means of sensor means. Based on the results of the determination, the heat exchanger assembly can be sent for brazing process in case of presence of the brazing ring in step 104 or prevented from being sent for brazing process in case of absence of the brazing ring 30 in step 105.

## Claims

1. A heat exchanger connection block 6 comprising an opening 20 for a tube 7 and a see-through channel 22 tangent to the opening 20, the opening 20 being adapted to receive a brazing ring 30, wherein the connection block 6 is adapted to accommodate at least part of the brazing ring 30 within the see-through channel 22.

2. A heat exchanger connection block 6 according to claim 1, wherein the see-through channel 22 is exposed from the face of the opening 20.

3. A heat exchanger connection block 6 according to claim 1, wherein the see-through channel 22 is covered with respect to the face of the opening 20.

4. A heat exchanger connection block 6 according to any preceding claim, wherein a tube 7 is inserted into the opening 20.

5. A heat exchanger connection block 6 according to claim 4, wherein the tube 7 comprises a collar 9 adjacent to the opening 20.

6. A heat exchanger connection block 6 according to any preceding claim, wherein a brazing ring 30 is received in the opening 20 and accommodated at least partly within the see-through channel 22.

7. A heat exchanger connection block 6 according to claim 5 and 6, wherein the collar 9 is brazed to the connection block 6 and to the see-through channel 22.

8. A heat exchanger connection block 6 according to any preceding claim, wherein the opening 20 comprises a stop portion for a tube, configured to enable only partial insertion of the tube.

9. A manifold comprising a connection block according to any of claims 1-8.

10. A heat exchanger comprising a connection block according to any of claims 1-8.

11. A method of manufacturing of a heat exchanger, comprising steps of:
- providing (101) a heat exchanger assembly with a connection block and a tube introduced into the connection block;
- aligning (102) the heat exchanger assembly in a position for determining of presence of a brazing ring between the connection block and the tube;
- determining (103) presence of the brazing ring and selecting between sending (104) the heat exchanger for brazing process in case of presence of the brazing ring and preventing (105) the heat exchanger from being sent for brazing process in case of absence of the brazing ring.
